# EUROPÄISCHE PATENTSCHRIFT

(11) **EP 2 595 902 B1**
(45) Veröffentlichungstag und Bekanntmachung des Hinweises auf die Patenterteilung: **23.09.2015**
(21) Anmeldenummer: 11740565.4
(22) Anmeldetag: 22.07.2011
(51) Int. Cl.: B65D 85/804

(54) **PORTIONSKAPSEL MIT KENNUNG**
PORTION CAPSULE HAVING AN IDENTIFIER
CAPSULE DE PORTION AVEC IDENTIFIANT

(30) Priorität: 07.02.2011 DE 102011010534; 02.09.2010 DE 102010044251; 22.07.2010 DE 102010031988
(43) Veröffentlichungstag der Anmeldung: 29.05.2013
(60) Teilanmeldung: 15173071.0
(73) Patentinhaber: K-fee System GmbH, 51469 Bergisch Gladbach (DE)
(72) Erfinder: KRÜGER, Marc, 51467 Bergisch-Gladbach (DE)
(74) Vertreter: Loock, Jan Pieter
(86) Internationale Anmeldenummer: PCT/EP2011/003677
(87) Internationale Veröffentlichungsnummer: WO 2012/010317

(56) Entgegenhaltungen:
- EP-A1- 0 468 078
- EP-A1- 0 468 079
- EP-A1- 1 849 718
- EP-A1- 1 974 638
- EP-A2- 1 471 012
- WO-A1-02/078498
- WO-A1-2005/044067
- FR-A1- 2 556 323
- FR-A1- 2 912 124
- US-A1- 2002 048 621
- US-A1- 2008 187 638

## Beschreibung

Die vorliegende Erfindung betrifft eine Portionskapsel gemäß des Oberbegriffs des Anspruchs 1.

Derartige Portionskapseln sind hinlänglich bekannt, z.B. von WO 02/078498, und werden in einer Vielzahl von Ausführungsformen am Markt angeboten. Da sich diese Kapseln oftmals relativ ähnlich sind, kann es vorkommen, dass Kapseln eines Herstellers in Kaffeeautomaten eines anderen Herstellers verwendet werden, wofür sie nicht geeignet sind. Dadurch können sich erhebliche Sicherheitsprobleme ergeben und/oder der Kaffeeautomat kann beschädigt werden.

Es war deshalb die Aufgabe der vorliegenden Erfindung, eine Portionskapsel zur Verfügung zu stellen, die nur für einen ganz bestimmten Kaffeeautomaten geeignet ist.

Gelöst wird die Aufgabe mit einer Portionskapsel zur Herstellung eines Getränks mit einem Baslselement, das einen Hohlraum aufweist, in dem ein Getränkerohmaterial vorgesehen ist und der von einer Membran, die an dem Basiselement befestigt Ist, verschlossen wird, wobei sie eine Kennung aufweist, die es ermöglicht, die jeweilige Portionskapsel zu individualisieren.

Die vorliegende Erfindung betrifft eine Portionskapsel zur Herstellung eines Getränkes oder Lebensmittels, welches einen Hohlraum aufweist, in dem ein Getränkerohmaterial vorgesehen ist. Eine derartige Portionskapsel wird beispielsweise aus Kunststoff, einem Naturstoff und/oder einem biologisch abbaubaren Werkstoff hergestellt und weist in der Regel ein Basiselement, insbesondere ein tiefgezogenes Basiselement, auf, das vorzugsweise kegelstumpfförmig oder zylindrisch geformt ist. In den Hohlraum der Portionskapsel wird das Getränkerohmaterial eingefüllt, das beispielsweise von einer Flüssigkeit, insbesondere Wasser, extrahiert und/oder aufgelöst wird.. Vorzugsweise wird das Basiselement nach dem Einfüllen des Getränkerohmaterials, insbesondere mit einer Membran verschlossen. Die Membran Ist vorzugsweise dem Boden des Basiselementes gegenüberliegend vorgesehen. Die Membran kann aus demselben oder einem unterschiedlichen Werkstoff als das Basiselement gefertigt sein und wird vorzugsweise durch Siegeln und/oder Kleben an dem Basiselement befestigt. Desweiteren können in dem Hohlraum ein oder mehrere Einbauelemente, wie beispielsweise ein Filter, ein Flüssigkeitsverteller, ein Vlies, ein Filz, eine Absperrfolie und/oder dergleichen vorgesehen werden. Für den Fall, dass ein Filz und ein Vlies vorgesehen sind, sind diese vorzugsweise miteinander verbunden. Der Flitz und/oder das Vlies können mehrlagig vorgesehen werden, wobei sich die Lagen in der Art des verwendeten Ausgangsmaterials und/oder dessen Verarbeitung unterscheiden können. Die Membran und/oder der Boden können mit mehreren Ausnehmungen (Löchern) versehen sein.

Eine erfindungsgemäße Portionskapsel ist in Anspruch 1 offenbart. Erfindungsgemäß ist vorgesehen, dass diese Portionskapsel eine Kennung aufweist, die es ermöglicht, die jeweilige Portionskapsel zu individualisieren. Individualisieren im Sinne der Erfindung bedeutet vorzugsweise, dass die jeweilige Portionskapsel einer Gruppe zugeordnet werden kann, die für den jeweiligen Kaffeeautomaten geeignet ist. Es ist nicht nötig, dass der Kaffeeautomat erkennt, um welche Portionskapsel es sich speziell handelt, sondern lediglich erkennt, dass die jeweilige Portionskapsel zu einer Gruppe von Portionskapseln gehört, die für den jeweiligen Kaffeeautomaten geeignet ist. Individualisieren bedeutet insbesondere, dass Portionskapseln, die nicht für den jeweiligen Kaffeeautomaten geeignet, in diesen nicht einführbar sind und/oder direkt wieder herausfallen und/oder dass der Kaffeeautomat nur mit richtigen Kapseln In Betrieb zu nehmen ist. Vorzugsweise erfasst ein an dem Kaffeeautomaten vorgesehener Sensor/Detektionsmittel diese Kennung und vergleicht sie vorzugsweise mit einer abgespeicherten Kennung. Vorzugsweise ist der Kaffeeautomat nur dann in Betrieb zu nehmen, insbesondere seine, das Wasser zur Verfügung stellende Druckpumpe, wenn die ermittelte Kennung mit der Referenzkennung übereinstimmt. Andernfalls ist der Kaffeeautomat nicht in Betrieb zu nehmen. Vorzugsweise ist das Detektionsmittel im Bereich des Einwurfschachtes des Kaffeeautomaten für die Portionskapseln vorgesehen. In einer anderen bevorzugten Ausführungsform ist das Detektionsmittel im Bereich der Brühkammer vorgesehen. Alternativ verhindert die Kennung ein Einführen der Kapsel in den Kaffeeautomat. Alternativ oder zusätzlich sind insbesondere in dem Einwurfschacht Mittel, insbesondere mechanische Mittel, besonders bevorzugt ein oder mehrere Zahnräder vorgesehen, die verhindern, dass eine falsche Portionskapsel in den Kaffeeautomaten, insbesondere den Einwurfschacht, gelangt.

Das Getränkerohmaterial umfasst insbesondere Kaffeepulver (vorzugsweise gemahlenen Röstkaffee), Schokoladenpulver, Miichpulver, Tee oder dergleichen. Alternativ ist denkbar, dass das Getränkerohmaterial ein Getränkeextrakt, wie beispielsweise Instant-Kaffee umfasst.

Ferner ist es erfindungsgemäß auch bevorzugt vorgesehen, dass innerhalb des Hohlraums ein Filterelement angeordnet ist, welches den Hohlraum in einen ersten Bereich zur Ordnung des Getränkerohmaterials und in einen zweiten Bereich zur Aufnahme eines Getränkeextrakts unterteilt, wobei es besonders bevorzugt vorgesehen ist, dass das Filterelement ein Vliesmaterial umfasst.

Ein weiterer Gegenstand der vorliegenden Erfindung ist die Verwendung einer erfindungsgemäßen Portionskapsel zur Herstellung eines Heißgetränks.

Im Folgenden wird die Erfindung anhand der Figuren 1 - 22 erläutert. Diese Erläuterungen schränken den allgemeinen Erfindungsgedanken nicht ein.
**Figur 1** zeigt eine Portionskapsel mit unterschiedlichen optischen Bereichen.
**Figur 2** zeigt eine Portionskapsel mit einem Barcode.
**Figur 3** zeigt eine Portionskapsel mit Ein- und Ausbuchtungen.
**Figur 4** zeigt eine Portionskapsel mit unterschiedlichen optischen Bereichen.
**Figur 5** zeigt einen Kapselkörper mit einer Schlüsselfunktion.
**Figur 6** zeigt eine elektrisch leitende Kapselwand.
**Figur 7** zeigt eine Portionskapselwand mit unterschiedlichen optischen Eigenschaften.
**Figur 8** zeigt einen verbreiterten Topfansatz der Kapselwand.
**Figur 9** zeigt eine erfindungsgemäße Portionskapsel mit einen elektrisch leitenden Randbereich.
**Figur 10** zeigt eine Kapsel mit einem elektrisch leitenden Kapselboden.
**Figur 11** zeigt eine Kapsel mit einer von einem Metalldetektor zu detektierenden Schicht.
**Figur 12** zeigt ein metallisches Sieb.
**Figur 13** zeigt eine Portionskapsel mit einem ferromagnetischen Bereich.
**Figur 14** zeigt eine Portionskapsel mit einem Barcode.
**Figur 15** zeigt eine Portionskapsel mit einem elektrisch leitenden Bereich in der Wandung.
**Figur 16** zeigt eine Portionskapsel mit einem Zahnkranz in der Brühkammer.
**Figuren 17** **a** - **c** zeigen unterschiedliche Ausführungsformen der Portionskapsel gemäß
Figur 16.

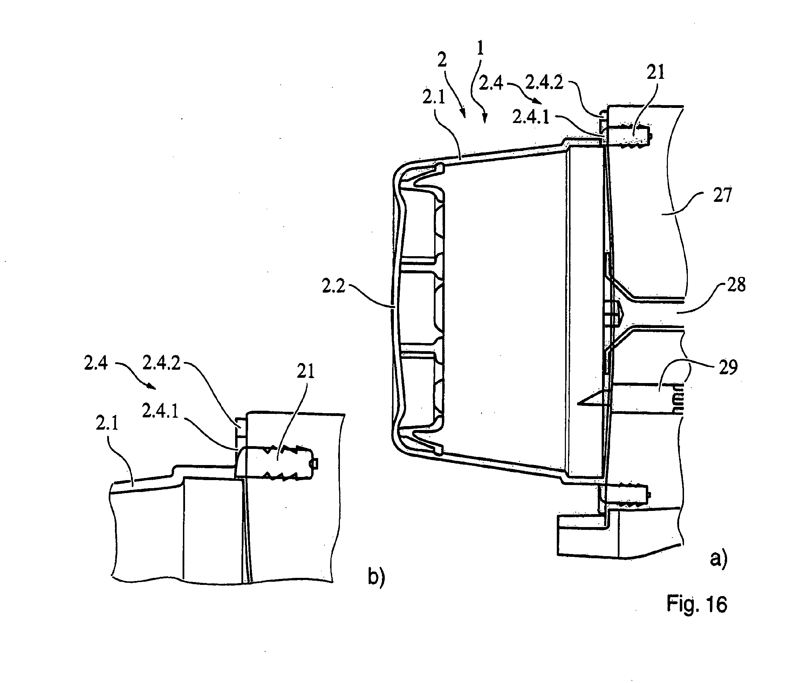

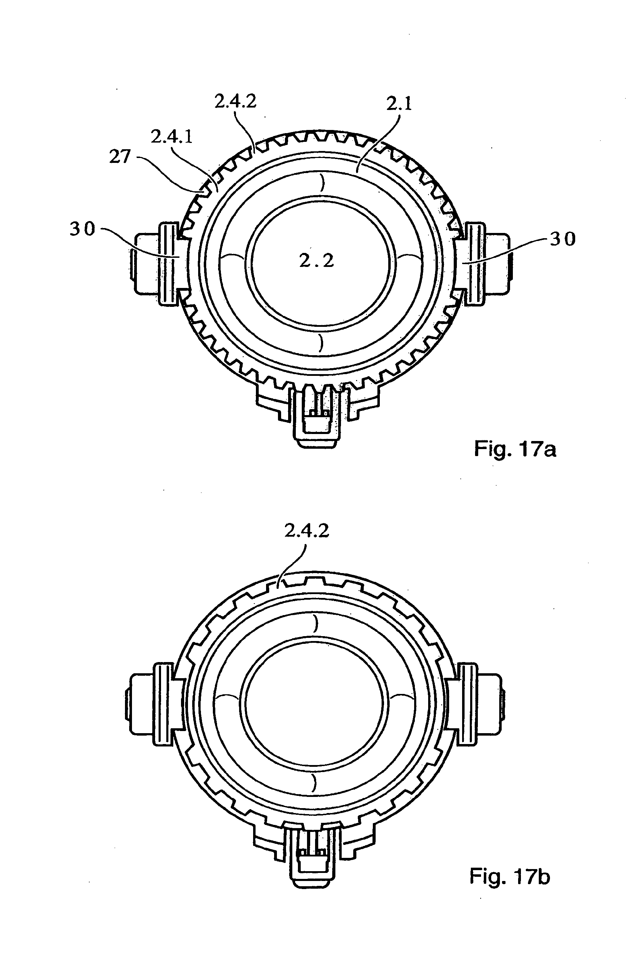

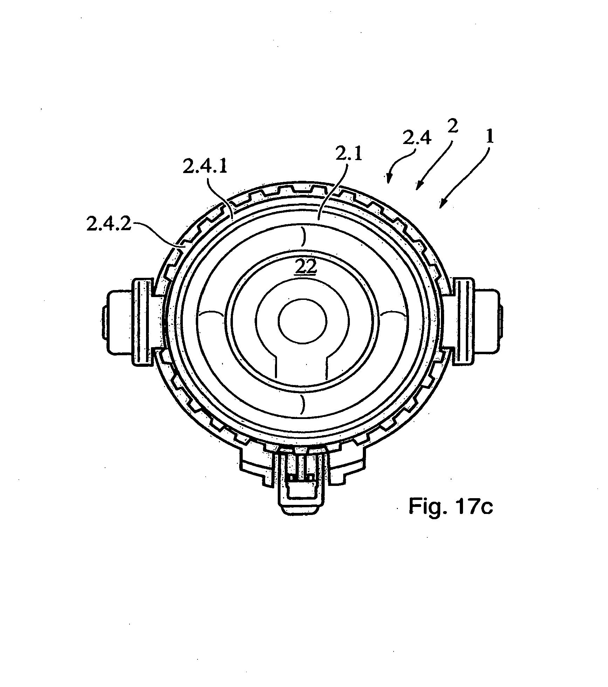

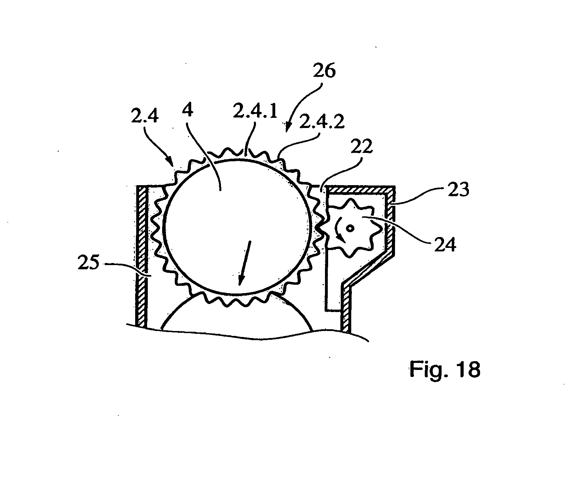

**Figur 18** zeigt die Portionskapsel gemäß den Figuren 16 und 17 im Formschluss mit einem Zahnrad.

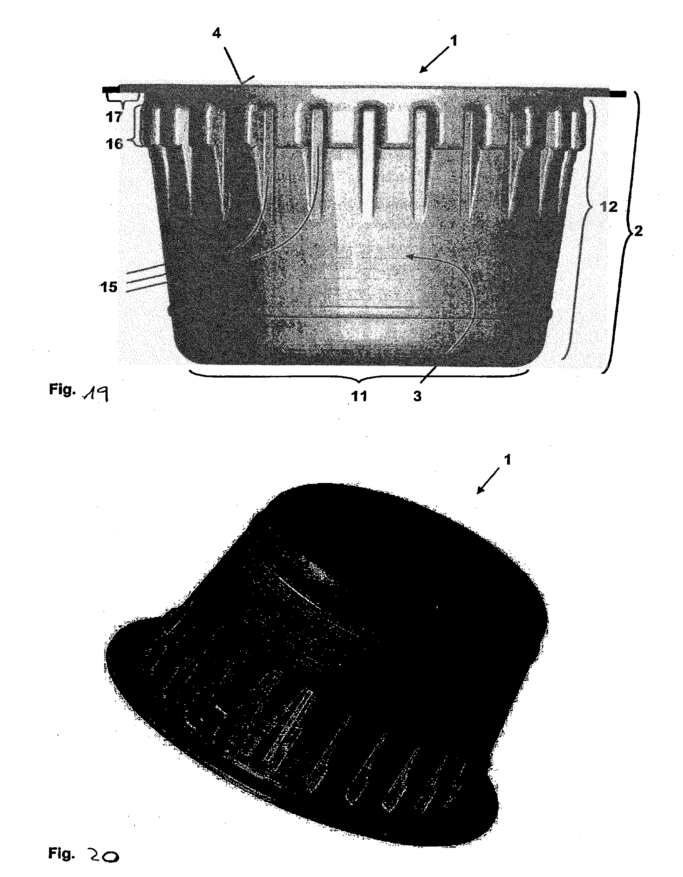

**Figuren 19 und 20** zeigen schematisch Ansichten einer Portionskapsel .

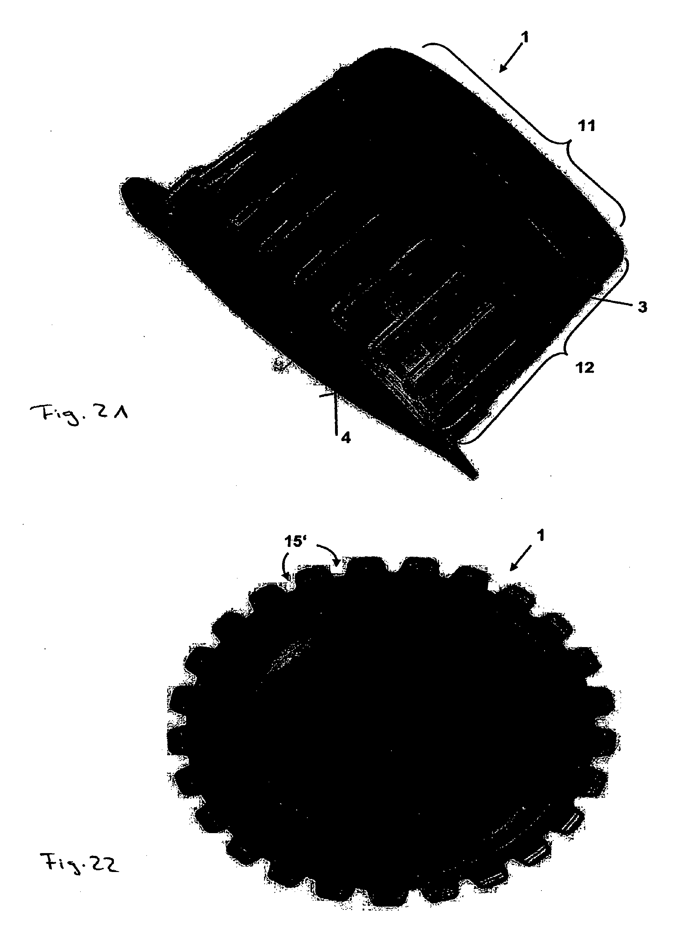

**Figuren 21 und 22** zeigen schematisch zwei Schnittansichten einer Portionskapsel.

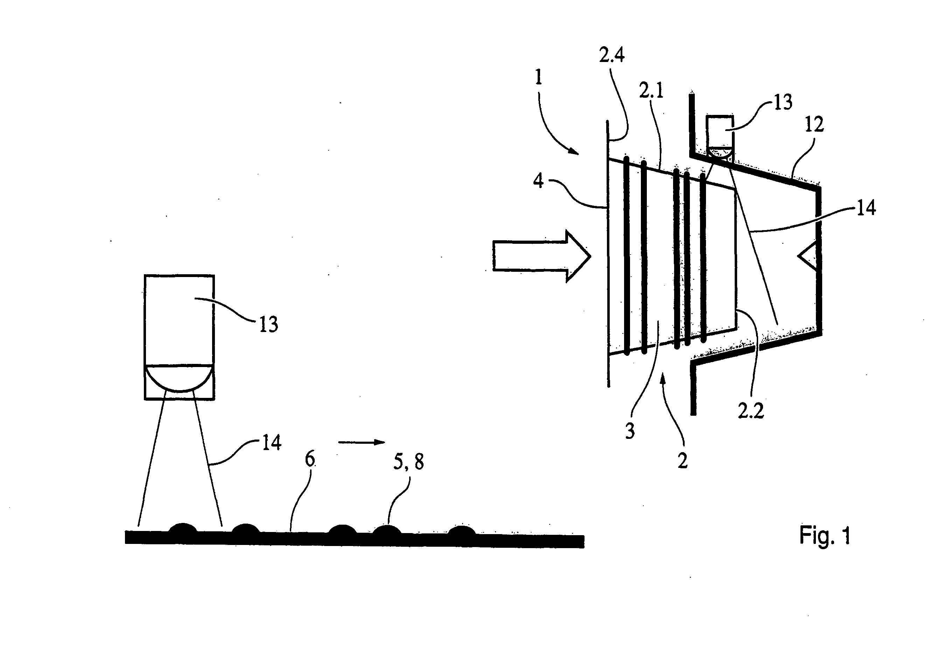

**Figur 1** zeigt in der rechten Darstellung eine Portionskapsel 1, die ein Basiselement 2 mit einer Wandung 2.1 und einem Bodenbereich 2.2 aufweist. Die Wandung 2.1 und der Boden 2.2 definieren einen Hohlraum, in den ein Getränkerohmaterial und ggf. ein Einbauelement vorgesehen werden können. Dieser Hohlraum wird nach dessen Befüllung von einer Membran verschlossen, die vorzugsweise mit dem Randbereich 2.4 des Basiselements beispielsweise durch Siegeln oder Kleben verbunden wird. Diese Kaffeekapsel wird in eine hier schematisch dargestellte Brühkammer 12 eingeführt, in der sie von einer Flüssigkelt, beispielsweise Wasser, durchströmt wird. Dabei wird das Getränkerohmaterial extrahiert oder aufgelöst und dadurch das gewünschte Getränk erzeugt. Diese Portionskapsel weist nun eine Kennung auf, mit der feststellbar ist, ob die jeweilige Portionskapsel für die in dem Kaffeeautomaten vorgesehene Brühkammer und die eingestellten Prozeßparameter geeignet ist. Ist dies nicht der Fall, können sich signifikante Sicherheitsprobleme ergeben. Beispielsweise kann durch den Einsatz einer falschen Portionskapsel die Dichtheit der Brühkammer gefährdet werden, so dass beispielsweise heißes Wasser unter einem hohen Druck aus dem Kaffeeautomaten austritt und dadurch einen Benutzer gefährden kann. Andererseits ist es auch vorstellbar, dass der Kaffeeautomat selbst durch den Einsatz einer falschen Portionskapsel beschädigt wird. In dem vorliegenden Beispiel handelt es sich bei der Kennung um mehrere erhabene Bereiche 8, die andere Reflexionseigenschaften aufweisen, als der dazwischen liegende Bereich. Diese Ausbuchtungen 8 werden, wie durch die Pfeile dargestellt, an einem Detektionsmittel hier einem optischen Detektionsmittel vorbeigeführt, das die erhabenen Bereiche und/oder die unterschiedlichen optischen Eigenschaften, beispielsweise Strahlungsreflexionseigenschaften, der unterschiedlichen Bereiche 5, 6 erkennt. Der Wechsel zwischen diesen unterschiedlichen Bereichen bzw. die Anzahl der Ausbuchtungen 8 ist die Kennung. Nachdem die Kennung erfasst worden ist, wird diese mit einer Referenzkennung verglichen und für den Fall, dass diese gleich sind, die Inbetriebnahme des Kaffeeautomaten zugelassen. Für den Fall, dass diese nicht übereinstimmen, wird insbesondere die Inbetriebnahme der Pumpe verhindert, die beispielsweise heißes Wasser durch die Brühkammer drückt.

Diese Ausführungen betreffend die Kennung gelten für alle weiteren Beispiele.

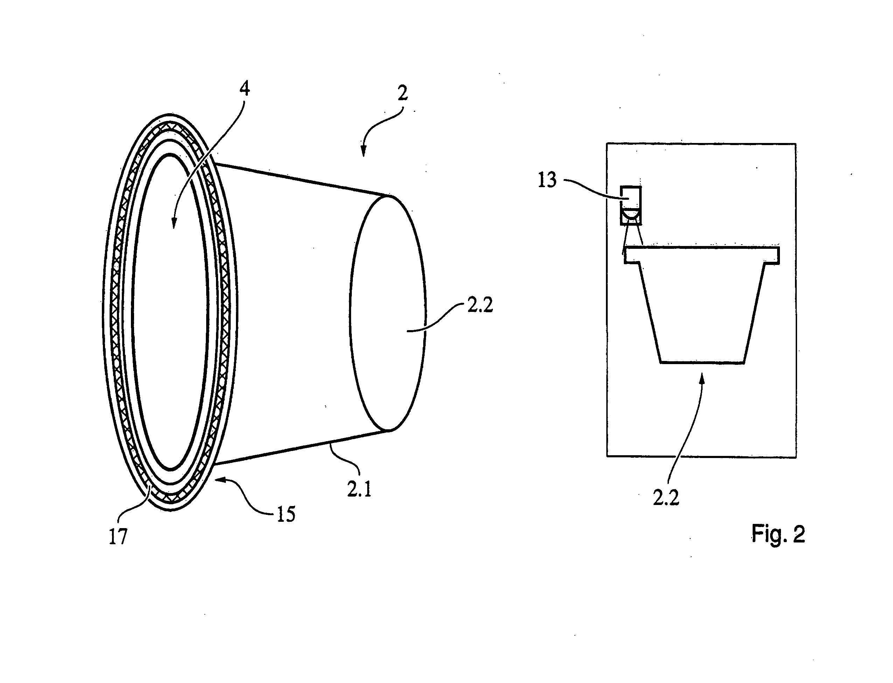

**Figur 2** zeigt eine weitere Portionskapsel. In dem vorliegenden Fall weist diese im Bereich der Oberseite der Membran einen Barcode auf. Dieser Barcode kann aufgedruckt durch einen Materialabtrag oder mit in der Folie vorhandenen optisch erkennbaren Mitteln, beispielsweise Fluoreszenzmitteln, hergestellt werden. Alternativ können entsprechende Metallringe Teil der Folie sein oder auf der Folie angebracht werden. Die Bereiche des Barcodes können auch aus einem ferromagnetischen Material bestehen. Alternativ kann der Barcode wie durch den Pfeil 15 symbolisiert an der der Membran abgewandten Seite des Randbereichs des Basiselementes vorgesehen werden. Dieser Barcode wird von einem Detektor 13 ausgelesen, beispielsweise in einem Einwurfschacht.. Der Barcode stellt einer Kennung dar.

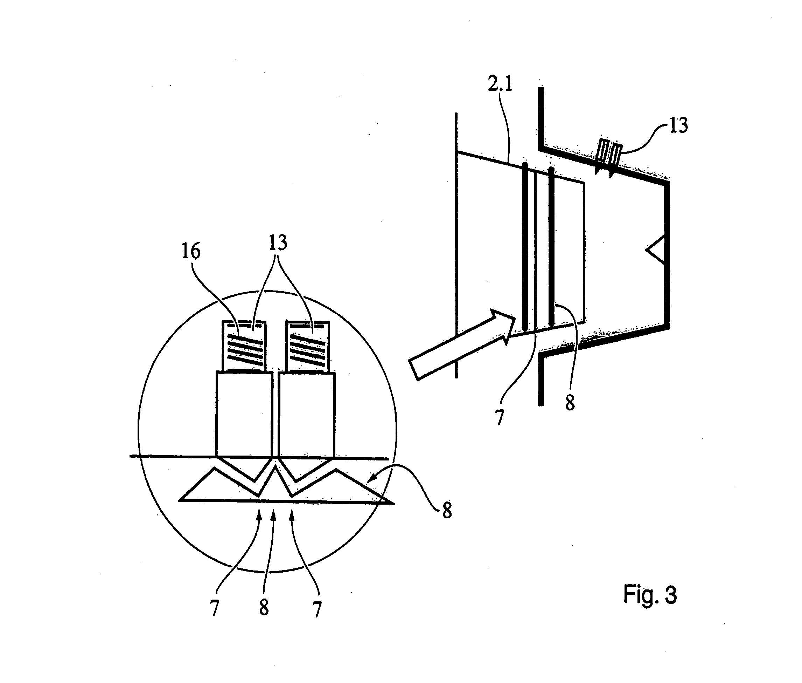

**Figur 3** zeigt eine weitere Portionskapsel. In dem vorliegenden Fall besteht die Kennung aus Einbuchtungen bzw. Ausbuchtungen die durch Materialabtrag oder durch Umformen in die Portionskapsel, hier in deren Wandung 2.1, eingebracht werden. Diese Ein- oder Ausbuchtungen wirken in dem vorliegenden Fall mit schlüsselartig funktionierenden Detektionsmitteln 13 zusammen, wobei in dem vorliegenden Fall der Kaffeeautomat nur dann in Betrieb zu nehmen ist, wenn alle Elemente 13 in einer entsprechenden Einbuchtung platziert sind. Dadurch wird beispielsweise ein Stromkreis verändert, insbesondere geschlossen.

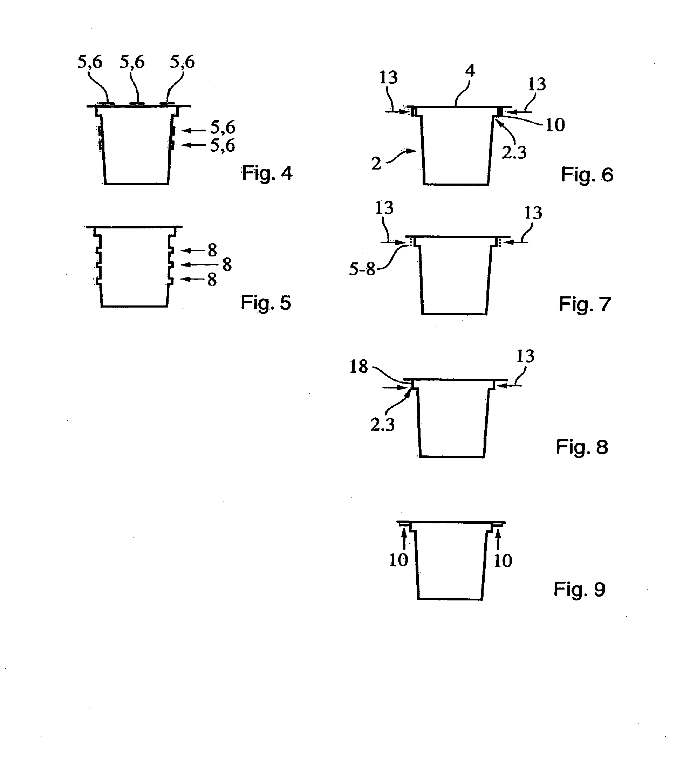

**Figur 4** zeigt im Wesentlichen die Kapsel gemäß Figur 1, wobei in dem vorliegenden Fall auch noch die Alternative dargestellt ist, dass die unterschiedlichen optischen Bereiche auf der Deckelfolie angeordnet sind, beispielsweise in Form eines Barcodes.

**Figur 5** zeigt eine Alternative zu der Kapsel gemäß Figur 3. Auch hier stellen die Ausbuchtungen 8 die Bärte eines Schlüssels dar. Der Kaffeeautomat ist nur dann in Betrieb nehmbar, wenn diese Ausbuchtungen mit entsprechenden Einbuchtungen zusammenwirken und dadurch beispielsweise einen Stromkreis entsprechend verändert wird. Dieses System kann nicht nur in der Brühkammer, sondern beispielsweise auch in dem Einführschacht für die Portionskapsel vorgesehen werden.

**Figur 6** zeigt eine Kapsel, bei der ein elektrisches Material in einem umlaufenden Ring, der vorzugsweise erhaben sein kann, vorgesehen ist. Das elektrisch leitende Material wird beispielsweise mit in einem Einwurfschacht angeordneten elektrischen Schleifkontakten während des Kapseleinwurts abgetastet, die elektrische Kontakte eines Steuerstromkreises sind.

**Figur 7** zeigt die Kapsel gemäß Figur 6, wobei in dem vorliegenden Fall in dem Ringbereich reflektierende oder stumpfe Zonen vorgesehen sind, beispielsweise in Form von Belägen und von in einem Einwurfschacht angeordneten optischen Mitteln während des Kapseleinwurfs ausgelesen, die Teile eines Steuerstromkreises sind.

**Figur 8** zeigt einen vergleichsweise breiten erhabenen Ring als Kennung. Der Einwurfschacht ist mit einer entsprechenden Einwurflehre versehen, die erkennt, ob die Portionskapsel die geforderte Kennung aufweist. Der verbreiterte Ring wird beispielsweise von den in einem Einwurfschacht angeordneten mechanischen Fühlern während des Kapseleinwurfs abgetastet, die elektrische Kontakte eines Stromkreises schließen.

**Figur 9** zeigt eine erfindungsgemäße Portionskapsel. In dem vorliegenden Fall ist die Rückseite des Randbereichs mit einem elektrisch leitenden Belag versehen und wird während des Kapseleinwurfes von in dem Einwurfschacht angeordneten elektrischen Schleifkontakten abgetastet, die elektrische Kontakte eines Steuerstromkreises sind.

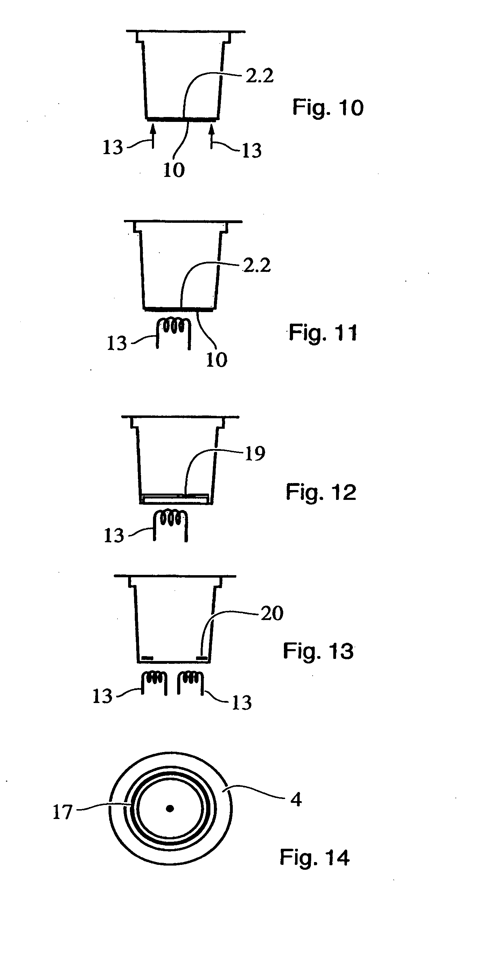

**Figur 10** zeigt eine Portionskapsel, die in dem vorliegenden Fall mit einem elektrisch leitenden Belag versehen ist, beispielsweise einem Leitlackbelag oder einer Alufolie. Die Abtastung erfolgt während des Kapseleinwurfes mit elektrischen Schleifkontakten, die elektrische Kontakte eines Steuerstromkreises sind.

Bei der Kapsel gemäß **Figur 11** weist die Kapsel hier der Boden ebenfalls einen elektrisch leitenden Belag auf, der während des Kapseleinwurfes eines im Schacht angeordneten, beispielsweise induktiven, Metallsuchsensors erkannt wird.

Bei der Kapsel gemäß **Figur 12** ist ein metallisches Einbauelement, hier ein Sieb 19, vorgesehen, das ebenfalls von einem Metalldetektor als Kennung erkannt werden kann.

Bei der Kapsel gemäß **Figur 13** ist ein ferromagnetisches Material, hier am Kapselboden vorgesehen. Das Auslesen der Kennung erfolgt beispielsweise während des Einwurfs der Kapsel mittels eines im Einwurfschacht angeordneten Magneten. Das ferromagnetische Material dient hier als Kennung.

**Figur 14** zeigt noch einmal eine Kapsel, bei der ein Barcode im Bereich der Deckelfolie vorgesehen ist.

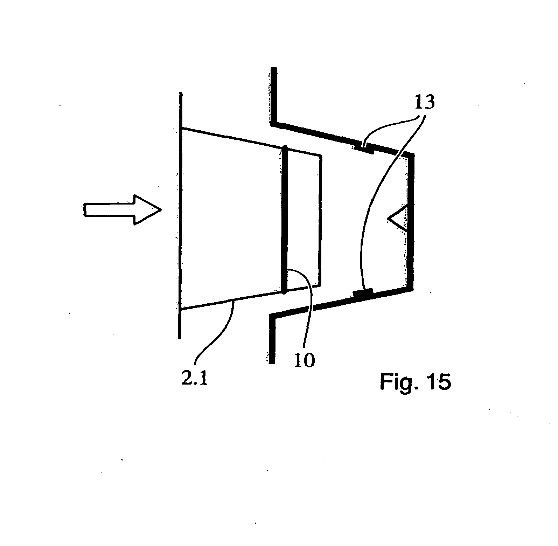

Bei der Kapsel gemäß **Figur 15** ist ein metallischer Ring in der Wandung vorgesehen und schließt einen im Bereich der Brühkammer vorgesehenen Stromkreis.

**Figur 16** zeigt eine Portionskapsel 1. Diese weist ein Basiselement 2 auf, das in dem vorliegenden Fall im Wesentlichen konisch vorgesehen ist und das eine Wandung 2.1 und einen Bodenbereich 2.2 aufweist. In diesem Basiselement werden das Rohmaterial sowie gegebenenfalls Einbauten vorgesehen, hier ein Filter. Der Fachmann versteht, dass in dem Basiselement auch andere Einbauten vorgesehen sein können. An dem dem Bodenbereich 2.2 gegenüberliegenden Ende des Basiselementes ist ein kreisringförmig vorgesehener Randbereich/Flansch 2.4 angeordnet, an den beispielsweise eine Deckelfolie gesiegelt wird. Dieser Randbereich 2.4 weist in seinem Außenbereich (äußerer Umfang) ein Form- und/oder Reibschlussmittel und/oder ein Detektionsmittel 2.4.2 auf. In dem vorliegenden Fall ist dieses Mittel 2.4.2, wie insbesondere den Figuren 17a - 17c entnommen werden kann, ein Zahnkranz 2.4.2, der beispielsweise durch die Anordnung einer Vielzahl von äquidistanten Einbuchtungen/Rillen erhalten wird, die in dem Randbereich vorgesehen werden. Innenliegend von diesem Zahnkranz ist in dem Randbereich 2.4 vorzugsweise eine Dichtungsfläche 2.4.1 vorgesehen, die mit einer Dichtung 21, die an der Brühkammer 27 angeordnet ist, dichtend zusammenwirkt. Diese Dichtung 21 sorgt dafür, dass Wasser, das durch den Wassereinlauf 28 strömt, in eine Öffnung der Kapsel, die durch den Aufstechdorn 29 hergestellt wird, in die Kapsel hinein und nicht um diese herum strömt.

**Figuren 17a** - **17c** zeigen unterschiedliche Ausführungsformen des Mittels 2.4.2. Bei der Ausführungsform gemäß Figur 17a sind an dem Zahnkranz fünfundvierzig Zähne vorgesehen, bei der Ausführungsform gemäß Figur 17b und bei der Ausführungsform gemäß Figur 17c zweiundzwanzig bzw. neunundzwanzig Zähne. Der Fachmann versteht, dass die resultierenden Zähne jede beliebige Form aufweisen können. Alle Figuren 17a - 17c zeigen wie die Portionskapsel 1 mittels zweier Haltearme 30 an einem Teil der Brühkammer 27 gehalten werden. Diese Haltearme 30 wirken mit dem Mittel 2.4.2 zusammen. Wäre dies nicht vorhanden, könnten die Haltearme die Kapsel nicht halten und die Kapsel könnte nicht in die Brühkammer eingeführt werden sondern würde in einen darunter liegenden Abwurfbehälter durchfallen. Die Haltearme 30 wirken folglich auch als Lehre.

**Figur 18** zeigt das Mittel 2.4.2 im Zusammenspiel mit einem Formschlussmittel 24, hier einem Ritzel, das an dem Kaffeeautomaten vorgesehen ist. Dieses Formschlussmittel 24 ist in dem Einwurfschacht 26 vorgesehen, der eine Einwurfschachtöffnung 22 aufweist, durch die die Portionskapset in den Kaffeeautomaten eingeworfen wird. Der Abstand zwischen der Kapselinnenwand 25 und dem Ritzel 24 ist so bemessen, dass die Portionskapsel den Einwurfschacht nur dann passieren kann, wenn die Formschlussmittel 2.4.2 komplementär zu den Zähnen des Ritzels 27 sind. Nur dann ist es möglich, dass die Portionskapsel bei ihrer Fallbewegung, die durch den Pfeil dargestellt ist, das Ritzel 24 in Rotation versetzt, wie ebenfalls durch einen Pfeil dargestellt. Erst durch diese Rotation kann die Portionskapsel den Einwurfschacht passieren und in die vorgesehene Position hineinfallen. Weist die Portionskapsel keine oder falsche Formschlussmittel 2.4.2 auf, kann die Kapsel nicht durch den Einwurfschacht in die vorgesehene Position gebracht werden. An dem Ritzel 24 kann zusätzlich oder alternativ ein Geber vorgesehen sein, der dessen Drehbewegung erfasst und an eine Steuerung weiterleitet. Umfasst diese Drehbewegung mindestens ein vorgegebenes Drehsegment schaltet die Steuerung beispielsweise die Brüheinheit frei. Der Fachmann erkennt, dass an dem Kapselrand auch Reibschlussmittel vorgesehen sein können, die reibschlüssig mit einem Mittel, beispielsweise einem Rand, zusammenwirken und dieses antreiben, wobei diese Bewegung wiederum erfasst und dadurch die Brühkammer freigeschaltet wird.

Weiterhin erkennt der Fachmann, dass beispielsweise in dem Einwurfschacht auch ein Sensor, beispielsweise eine Kamera, vorgesehen sein kann, die die Form des Mittels 2.4.2 erfasst. Beispielsweise könnten in dem vorliegenden Fall die Form und/oder der Abstand der Zähne erfasst werden. Dieses Signal wird wiederrum an eine Steuerung geleitet, die beispielsweise die Brühkammer freigibt, wenn es sich um die richtige Kapsel handelt.

In Figur 19 ist schematisch eine Ansicht einer weiteren Portionskapsel dargestelit. In Figur 20 ist ebenfalls schematisch eine Ansicht einer solchen Portionskapsel dargestellt, wobei jedoch eine andere perspektivische Ansicht gewählt ist. Hierbei zeigt die Figur 19 eine Ansicht einer Portionskapsel von vorne. Die Figur 20 zeigt eine Ansicht der Portionskapsel von schräg unten. Die Portionskapsel ist in allen Figuren mit dem Bezugszeichen 1 bezeichnet. Die Portionskapsel 1 weist ein im Wesentlichen kegelstumpfförmiges Basiselement 2 auf, welches topfähnlich ausgeformt ist und einen Hohlraum 3 umschließt. Der Hohlraum 3 wird von einer Membran 4 verschlossen. Die Blickrichtung gemäß der Figur 1 ist im Wesentlichen parallel zur Erstreckungsebene der Membran 4, sodass die Membran 4 lediglich am oberen Rand der Portionskapsel angedeutet ist. Das Basiselement 2 umfasst insbesondere ein weiches, halbstarres oder starres Kunststoffmaterial welches vorzugsweise tiefgezogen wurde. Die Membran 4 umfasst vorzugsweise eine dünne Kunststoff- oder eine Aluminiumfolie. Das Basiselement weist im Bereich der Membran einen bevorzugt umlaufenden Befestigungsflansch 17 auf, wobei die Membran 4 mit dem Befestigungsflansch 17 stoffschlüssig verbunden, insbesondere verschweißt oder verklebt ist. Innerhalb des Basiselements 2 bevorzugt ist ein Filterelement angeordnet, welches jedoch in den Figuren nicht eigens dargestellt ist. Das Filterelement ist beispielsweise aus einem thermoplastischen Kunststoff, beispielsweise Polypropylen, hergestellt. Das Filterelement kann auch in Form eines Vliesmaterials hergestellt sein, beispielsweise aus einem thermoplastischen Kunststoff. Das Filterelement unterteilt den Hohlraum 3 bevorzugt in einen ersten Bereich und in einen zweiten Bereich wobei der erste Bereich zur Aufnahme eines Getränkerohmaterials vorgesehen ist und wobei der zweite Bereich zur Aufnahme und insbesondere zum Sammeln eines nicht abgebildeten Getränkeextrakts während des Extraktionsvorgangs der Portionskapsel 1 vorgesehen ist. Der erste und zweite Bereich ist jedoch in den Figuren nicht einzeln dargestellt.

Die Portionskapsel 1 ist dafür vorgesehen, in eine Brühkammer einer nicht gezeigten Vorrichtung zur Herstellung eines Getränks eingesetzt zu werden. Eine solche Vorrichtung zur Herstellung eines Getränks ist insbesondere eine Kaffeemaschine bzw. ein Kaffeeautomat; es kann sich jedoch bei der Vorrichtung zur Herstellung eines Getränks auch um eine Maschine zur Herstellung eines Teegetränks, eines Schokoladengetränks oder sonstiger Getränke handeln. In einer Brühkammer einer solchen Vorrichtung zur Herstellung eines Getränks wird der Portionskapsel eine Extraktionsflüssigkeit vorzugsweise unter hohem Druck zugeführt, insbesondere Wasser bzw. heißes Wasser. Diese Extraktionsflüssigkeit wechselwirkt mit dem Getränkerohmaterial innerhalb der Portionskapsel so, dass sich ein Getränkeextrakt bzw. ein Getränk bildet. Das Filterelement dient bei diesem Extraktionsvorgang insbesondere als ein Sieb für das Getränkeextrakt.

Das Basiselement 2 weist einen Wandungsbereich 12 und einen Bodenbereich 11 auf. Der Wandungsbereich 12 erstreckt sich im Wesentlichen zwischen dem Flansch 17 und dem Bodenbereich 11. In den Wandungsbereich 12 ist eine Mehrzahl von Rillen 15 eingebracht, welche insbesondere als in den Wandungsbereich 12 eingebrachte und in Form von dem Hohlraum 3 zugewandte im Wesentlichen längs zwischen dem Flansch 17 und dem Bodenbereich 11 sich erstreckende (d. h. im Wesentlichen in der Darstellung nach Figur 19 senkrecht verlaufende) Nuten ausgebildet sind. Insbesondere ist es vorgesehen, dass die Rillen 15 sich entlang dem Wandungsbereich 12 vertikal erstrecken, d. h. in gerader Richtung vom Flansch 17 aus zum Bodenbereich 11 hin, wobei sich jedoch die Rillen nicht zwingend über die gesamte Länge erstrecken. Die Rillen 15 sind derart ausgebildet, dass der Wandungsbereich 12 durch die Mehrzahl der Rillen 15 verstärkt bzw. versteift wird. Darüber hinaus wird durch die Mehrzahl der Rillen 15, welche insbesondere über den Wandungsbereich 12 verteilt angeordnet sind, eine Anhaftung zwischen dem Wandungsbereich 12 und der Wandung der Brühkammer der Vorrichtung zur Herstellung eines Getränks nach dem Extraktionsvorgang verhindert, wodurch ein automatisches Auswerfen der Portionskapsel 1 aus der Brühkammer erleichtert wird. Die in Figur 19 dargestellte Ausführungsform der Portionskapsel 1 weist ferner einen umlaufenden Absatz 16 auf, welcher in dem Wandungsbereich 12 zwischen dem Flansch 17 und dem Bodenbereich 11 angeordnet ist und zwar an den Flansch 17 anschließen in Richtung zum Bodenbereich 11 hin. Der Absatz 16 weist gegenüber dem restlichen Wandungsbereich 12, der sich zwischen dem Absatz 16 und dem Bodenbereich 11 befindet, einen vergrößerten Durchmesser (parallel zur Membran 4) auf. Die Kontur des Absatzes 16 ist vorzugsweise derart ausgebildet, dass der Durchmesser des Absatzes 16 sich in Richtung des Flansches 7 hin etwas verringert.

Bei der in Figur 19 dargestellten Portionskapsel 1 ist es vorgesehen, dass die Rillen 15 sich in einem ersten Teilbereich der Rillen 15 im Bereich des Absatzes 16 erstrecken und in einem weiteren Teilbereich der Rillen 15 vom Absatz 16 zum Bodenelement 11 hin ein Stück entlang des restlichen Wandungsbereichs 12 erstrecken, dann jedoch enden. Insgesamt erstrecken sich beispielsweise die Rillen 15 über etwa 50 % der Erstreckung des Wandbereichs zwischen dem Flansch 17 und dem Bodenbereich 11, wobei etwa ein Drittel der Erstreckung der Rillen 15 im Bereich des Absatzes 16 verläuft und die restlichen zwei Drittel der Erstreckung der Rillen 15 sich im restlichen Wandungsbereich 12 zwischen dem Absatz 16 und dem Bodenbereich 11 erstreckt.

In Figur 21 Ist schematisch eine Schnittansicht einer Portionskapsel 1 entlang der Höhenerstreckung der Portionskapsel, d. h. mit einer Schnittfläche senkrecht zur Erstreckungsebene der Membran 4 dargestellt. In Figur 22 ist ferner eine Schnittansicht einer Portionskapsel 1 dargestellt, mit einer Schnittebene, die parallel zur Erstreckung der Membranebene verläuft. Erkennbar ist, dass in Figur 21 die Innenseite des Hohlraums der Portionskapsel 1 dargestellt ist. Das Material der Portionskapsel 1 bzw. des Basiselements 2 der Portionskapsel 1 ist derart dünn ausgebildet, dass die Realisierung der Rillen 15 auf der in Figur 19 dargestellten Außenseite entsprechende korrespondierende Ausformungen bzw. Eindellungen auf der Innenseite nach sich ziehen. In Figur 22 ist besonders die Realisierung der zahnradförmigen Kontur 15' sichtbar, die sich durch die Einbringung der Rollen 15 in den Wandungsbereich 12 der Portionskapseln 1 ergibt.

### Bezugszeichenliste:

- 1: Portionskapsel
- 2: Basiselement
- 2.1: Wandung
- 2.2: Bodenbereich
- 2.3: umlaufender Ring
- 2.4: Randbereich, Flansch
- 2.4.1: Dichtungsbereich
- 2.4.2: Formschlussmittel, Reibschlussmittel und/oder Detektionsmittel
- 3: Hohlraum
- 4: Membran
- 5: glänzende Fläche
- 6: matte Fläche
- 7: Einbuchtung
- 8: Ausbuchtung
- 9: Aufdruck
- 10: elektrisch leitender Bereich
- 11: metallischer Bereich, Bodenbereich
- 12: Brühkammer, Wandungsbereich
- 13: Detektionsmittel, Scanner. Fühler
- 14: Strahl
- 15: Randbereich, Rillen
- 16: Federmittel, Absatz
- 17: Barcode, Befestigungsflansch
- 18: Dimension der Portionskapsel
- 19: Einbauelement, Sieb
- 20: ferromagnetischer Bereich
- 21: Dichtung
- 22: Einwurfschachtöffnung
- 23: Einwurfschachtgehäuse
- 24: Formschlussmittel, Ritzel
- 25: Einwurfschachtinnenwand
- 26: Einwurfschacht
- 27: Brühkammer
- 28: Wassereinlauf
- 29: Aufstechdorn
- 30: Haltemittel

## Patentansprüche

1. Portionskapsel (1) zur Herstellung eines Getränks mit einem Basiselement (2), an dem ein Randbereich (2.4) vorgesehen ist, wobei das Basiselement (2) einen Hohlraum (3) aufweist, in dem ein Getränkerohmaterial vorgesehen ist und der von einer Membran (4) verschlossen wird, die auf einer Seite des Randbereichs an dem Basiselement befestigt ist, wobei die Portionskapsel eine Kennung (5) aufweist, die es ermöglicht die jeweilige Portionskapsel zu individualisieren, **dadurch gekennzeichnet, dass** die Kennung ein elektrisch leitender Belag ist, der auf der anderer Seite des Randbereichs vorgesehen ist.

2. Portionskapsel (1) nach einem der voranstehenden Patentansprüche, **dadurch gekennzeichnet, dass** die Kennung ein metallischer Bereich (11) ist.

3. Portionskapsel (1) nach einem der vorhergehenden Ansprüche, **dadurch gekennzeichnet, dass** innerhalb des Hohlraums (3) ein Filterelement angeordnet ist, welches den Hohlraum (3) in einen ersten Bereich (8) zur Aufnahme des Getränkerohmaterials und in einen zweiten Bereich (9) zur Aufnahme eines Getränkeextrakts unterteilt.

4. Portionskapset (1) nach Anspruch 4, **dadurch gekennzeichnet, dass** das Filterelement (5) ein Vliesmaterial umfasst.

5. Verwendung einer Portionskapsel (1) nach einem der vorhergehenden Ansprüche zur Herstellung eines Heißgetränks.

## Claims

1. Portion capsule (1) for making a beverage, having a basic element (2) on which a peripheral region (2.4) is provided, wherein the basic element (2) has on one side of the peripheral region a cavity (3), in which a raw beverage material is provided and which is closed by a membrane (4), which is fastened wherein the portion capsule on the basic element, has an identifier (5), which makes it possible to individualize the respective portion capsule, **characterized in that** the identifier is an electrically conductive coating which is provided on the other side of the peripheral region.

2. Portion capsule (1) according to one of the preceding patent claims, **characterized in that** the identifier is a metallic region (11).

3. Portion capsule (1) according to either of the preceding claims, **characterized in that** the cavity (3) contains a filter element, which subdivides the cavity (3) into a first region (8) for accommodating the raw beverage material and into a second region (9) for accommodating a beverage extract.

4. Portion capsule (1) according to Claim 4, **characterized in that** the filter element (5) comprises a nonwoven material.

5. Use of a portion capsule (1) according to one of the preceding claims for making a hot beverage.

## Revendications

1. Dose en capsule (1) pour la préparation d'une boisson avec un élément de base (2) au niveau duquel est prévue une région de bord (2.4), l'élément de base (2) présentant une cavité (3) dans laquelle est prévue une matière de base pour une boisson, et qui est fermée par une membrane (4) qui est fixée d'un côté de la région de bord à l'élément de base, la dose en capsule présentant un marquage (5) qui permet d'identifier individuellement la dose en capsule respective, **caractérisée en ce que** le marquage est un revêtement électriquement conducteur qui est prévu de l'autre côté de la région de bord.

2. Dose en capsule (1) selon l'une quelconque des revendications précédentes, **caractérisée en ce que** le marquage est une région métallique (11).

3. Dose en capsule (1) selon l'une quelconque des revendications précédentes, **caractérisée en ce qu'**à l'intérieur de la cavité (3) est disposé un élément de filtre qui divise la cavité (3) en une première région (8) pour recevoir la matière de base pour une boisson et une deuxième région (9) pour recevoir un extrait de boisson.

4. Dose en capsule (1) selon la revendication 4, **caractérisée en ce que** l'élément de filtre (5) comprend un matériau non-tissé.

5. Utilisation d'une dose en capsule (1) selon l'une quelconque des revendications précédentes pour la préparation d'une boisson chaude.
